## Europäisches Patentamt
## European Patent Office
## Office européen des brevets

(19)

(11) Veröffentlichungsnummer: **0 216 120**
**A1**

(12) # EUROPÄISCHE PATENTANMELDUNG

(21) Anmeldenummer: **86111336.3**

(22) Anmeldetag: **16.08.86**

(51) Int. Cl.⁴: **G 01 B 3/14**

(30) Priorität: 13.09.85 CH 3971/85

(43) Veröffentlichungstag der Anmeldung:
**01.04.87 Patentblatt 87/14**

(84) Benannte Vertragsstaaten:
**CH DE FR GB IT LI**

(71) Anmelder: **BAGREAL AG**
**Birgistrasse 7**
**CH-8304 Wallisellen(CH)**

(72) Erfinder: **Armbruster, Eberhard**
**Casper Wueststrasse 66**
**CH-8052 Zürich(CH)**

(72) Erfinder: **Soriano, Antonio**
**Guyerstrasse 9**
**Ch-8304 Wallisellen(CH)**

(74) Vertreter: **EGLI-EUROPEAN PATENT ATTORNEYS**
**Horneggstrasse 4**
**CH-8008 Zürich(CH)**

(54) **Einstellbare Lehre.**

(57) Ein feststehender (2) und ein verstellbarer (5) Backen weisen je mindestens eine bogenförmige Messfläche (8,9) auf. Auf einem Schlitten (4), der auf einer am Sockel (1) angeordneten Schiene (3) wahlweise gleitend verschiebbar oder feststellbar ist, ist der verstellbare Backen (5) lösbar festgehalten. Eine Vorrichtung (10) ermöglicht die Feinjustierung seiner Position auf dem Schlitten (4). Der Schlitten (4) und der verstellbare Backen (5) können aufeinander gleitfähige Auflageflächen (11,12) aufweisen, die parallel zur Gleitrichtung (7) des Schlittens (4) auf der Schiene (3) liegen. Der verstellbare Backen (5) kann um einen senkrecht zur Auflagefläche (11) liegenden Zapfen (16) des Schlittens (4) drehbar sein. Zwischen dem Schlitten (4) und dem verstellbaren Backen (5) kann ein lösbares Befestigungsmittel (13) im angezogenen Zustand die Auflageflächen (11,12) aufeinander drücken. Das Befestigungsmittel (13) kann vom Schlitten (4) und vom verstellbaren Backen (5) und dieser vom Schlitten (4) entfernt werden. Die Vorrichtung zur Feinjustierung (10) kann einen Feintrieb mit einem Bolzen (19), einer Klemmvorrichtung (20) und einem am Schlitten (4) befestigten Körper (18) umfassen, während das Ende des Bolzens (19) mit einer Ambossstelle des verstellbaren Backens (5) in Anschlag bringbar ist. Der Hub des Bolzens (19) im Feintrieb kann begrenzt sein. Der feststehende Backen (2) kann zwei bogenförmige Messflächen in doppelkonkaver Anordnung aufweisen. Der Schlitten (4) ist auf die Schiene (3) mit dem feststehenden Backen (2) wahlweise zugewandten oder abgewandten Messfläche (9) des verstellbaren Backens (5) aufsetzbar. Es wird ein Verfahren zur Betrieb der Lehre angegeben.

EP 0 216 120 A1

./...

Fig.1

## Einstellbare Lehre <span>0216120</span>

Die Erfindung betrifft eine einstellbare Lehre mit mindestens einem feststehenden und einem verstellbaren Backen gemäss dem Oberbergiff des Patentanspruchs 1 sowie ein Verfahren zu ihrem Betrieb.

Bei der Fertigung von Werkstücken von hoher Präzision im Bereich von wenigen bis 1/um müssen die präzis zu haltenden Dimensionen des jeweiligen Werkstücks kontrolliert werden. Diese Kontrolle des Werkstücks findet mit Hilfe einer Messuhr statt. Zur Vermeidung von Fehlern muss so vorgegangen werden, dass die Messuhr Null anzeigt, wenn die gemessene Dimension das gewünschte Mass aufweist. Die Messuhr wird also im vorhinein so eingestellt, dass deren Zeiger dann auf Null zeigt, wenn die damit gemessene Dimension das gewünschte Mass aufweist. Nun stellt sich aber dass Problem, dass in der Fertigungswerkstatt die Dorne der Messuhr der Verschmutzung ausgesetzt sind oder die Messuhr sonstwie ungewollt verstellt werden könnte. Daher muss die genaue Einstellung der Messuhr von Zeit zu Zeit kontrolliert werden. Diese Kontrolle findet mit Hilfe einer Lehre statt, welche die gewünschte Dimension mindestens mit der gewünschten Präzision darstellt. Für jede der gewünschten Dimensionen braucht man also eine entsprechende Lehre, d.h. so viele Lehren, wie verschiedene Dimensionen am Werkstück zu messen sind. Die Fertigung und Aufbewahrung dieser Vielzahl von Lehren, von denen jede die gewünschte Präzision unter allen Umständen einhalten muss, ist sehr aufwendig. Auch die sorgfältige Handhabung dieser Lehren ist sehr aufwendig. Daher besteht ein Bedarf für eine Lehre, die fähig ist, bei geringem Aufwand mehrere verschiedene Dimensionen darzustellen und nach Einstellung dieser Dimensionen die Präzision derselben auch unter den rauhen Bedingungen der Fertigungswerkstatt nicht zu verlieren.

Aufgabe der Erfindung ist es daher, eine Lehre der eingangs erwähnten Art zu schaffen, die mehrere Dimensionen darstellen kann und mit geringem Aufwand einstellbar, verwendbar, kontrollierbar und bei Bedarf nachjustierbar ist.

Diese Aufgabe wird gelöst durch eine Lehre der eingangs erwähnten Art, die gekennzeichnet ist durch die im Anspruch 1 angegebene Kombination von Merkmalen. Vorteilhafte Ausbildungen der Lehre und ein Verfahren zu ihrem Betrieb ergeben sich aus den abhängigen Ansprüchen.

Nachstehend wird die Erfindung unter Bezugnahme auf die Zeichnung im einzelnen beschrieben und es werden die damit erreichten Vorteile erläutert, wobei die dargestellte Ausbildung bloss als Veranschaulichung und in keiner Weise als Einschränkung der Erfindung zu verstehen ist. In allen Figuren werden für gleiche Teile gleiche Bezugszeichen verwendet. Es zeigen:

Fig. 1     einen schematischen Grundriss der erfindungsgemässen einstellbaren Lehre,

Fig. 2     einen schematischen Seitenriss der erfindungsgemässen einstellbaren Lehre, und

Fig. 3     einen schematischen Grundriss einer bevorzugten Ausbildung eines feststehenden Backens in der erfindungsgemässen einstellbaren Lehre.

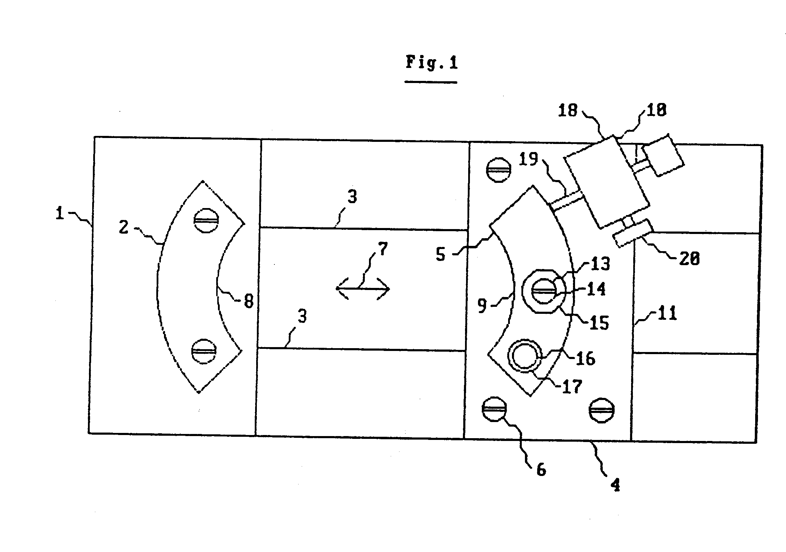

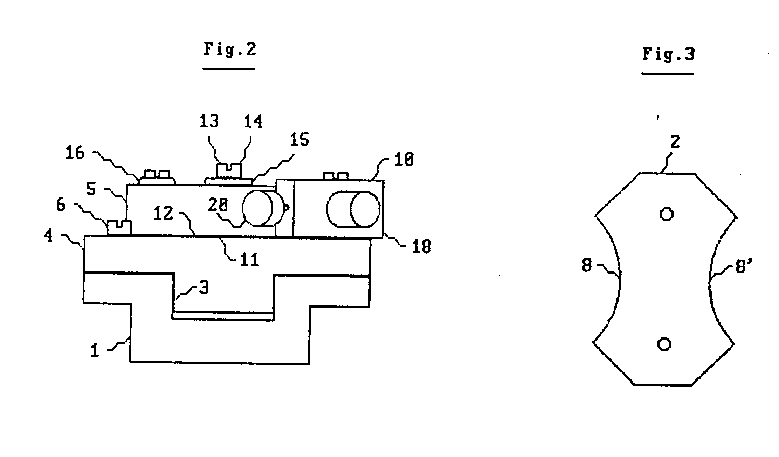

Eine erfindungsgemässe Lehre ist in Fig. 1 schematisch im Grundriss und in Fig. 2 schematisch im Seitenriss dargestellt. Auf einem Sockel 1 ist ein feststehender Backen 2 mit an sich bekannten und in der Zeichnung zwar angedeuteten aber nicht näher bezeichneten Mitteln, beispielweise mit Schrauben befestigt. Am Sockel 1 ist auch eine Schiene 3 angeordnet, auf die ein Schlitten 4 aufgesetzt ist. Auf dem Schlitten 4 ist ein verstellbarer Backen 5 auf weiter unten zu beschreibende Weise angeordnet.

Die Schiene 3 ist im vorliegenden Beispiel im Innern des Sockels 1 als Kombination von zwei Führungsflanken und einer dazwischenliegenden Wanne ausgebildet, sie kann jedoch eine beliebige andere übliche Form aufweisen, zum Beispiel die aus optischen Versuchseinrichtungen bekannte dreieckige Form. Der Schlitten 4 ist auf der Schiene 3 mit an sich bekannten Mitteln, beispielsweise mit einer von Schrauben 6 angezogenen und nicht näher dargestellten Klemmvorrichtung arretierbar. Eine solche Klemmvorrichtung kann beispielsweise so ausgebildet sein, dass die Schrauben 6 durch einen Schlitz in der Schiene 3 geführt werden und in eine Platte eingeschraubt sind, welche sich mit dem Schlitten 4 bewegt und beim Anziehen der Schrauben 6 gegen den Sockel angedrückt wird, um den Schlitten 4 durch Klemmwirkung festzuhalten. Der Schlitten 4 ist aber auch nach einem Öffnen oder Entfernen der Klemmvorrichtung von der Schiene 3 entfernbar. Zudem kann er auf der Schiene 3 in der vom Doppelpfeil 7 angedeuteten Richtung zum oder weg vom feststehenden Backen 2 gleiten, wenn er nicht durch die Klemmvorrichtung auf der Schiene 3 arretiert ist. Der Schlitten 4 ist also auf der Schiene 3 wahlweise verschiebbar oder arretierbar.

Der feststehende Backen 2 ist mit einer bogenförmigen Messfläche 8 und der verstellbare Backen 5 ist mit einer bogenförmigen Messfläche 9 versehen. Diese Messflächen sind auf bekannte Weise dazu bestimmt, durch den Extremwert (Maximum oder Minimum) ihres Abstandes eine gewünschte vorbestimmte Dimension darzustellen, die beispielsweise mit einer Messuhr bestimmbar ist. Diese Dimension wird beispielsweise in einer Fertigungswerkstatt verwendet, um mit einer Dimension von Werkstücken verglichen zu werden. Zur Feinjustierung der zwischen den Messflächen 8 und 9 dargestellten Dimension ist auf weiter unten zu beschreibende Weise eine Vorrichtung 10 zwischen dem verstellbaren Backen 5 und dem Schlitten 4 angeordnet. Mit Hilfe dieser Vorrichtung ist die Position des verstellbaren Backens 5 auf dem Schlitten 4 auf feine Weise
justierbar, indem der Abstand zwischen je einer weiter unten
definierten Referenzstelle des verstellbaren Backens 5 und
des Schlittens 4 eingestellt wird.

Der Schlitten 4 weist eine ebene Auflagefläche 11 auf, welche
parallel zur Schiene 3 oder genauer ausgedrückt parallel zur
Gleitrichtung 7 des Schlittens 4 auf der Schiene 3 liegt.
Auch am verstellbaren Backen 5 ist eine ebene Auflagefläche
12 vorgesehen. Die Auflageflächen 11 und 12 liegen aufeinander, d.h. ihre Ebenen fallen zusammen, wenn der verstellbare
Backen 5 auf dem Schlitten montiert ist.

Zwischen dem Schlitten 4 und dem verstellbaren Backen 5 ist
ein Befestigungsmittel 13 angeordnet, das im dargestellten
Beispiel als selbständige Teile im wesentlichen eine Schraube
mit einem Schraubenkopf 14 und mindestens eine Unterlage 15
für den Schraubenkopf 14 umfasst. Ferner umfasst das Befestigungsmittel 13 eine im Schlitten angeordnete Gewindebohrung,
die senkrecht zur Auflagefläche 11 steht und in welche das
Gewinde der Schraube passt, sowie eine im verstellbaren
Backen 5 angeordnete glatte Bohrung, die senkrecht zur Auflagefläche 12 steht. Wenn der verstellbare Backen 5 auf dem
Schlitten 4 montiert ist, liegt der die Gewindebohrung überragende, also nicht in der Gewindebohrung eingeschraubte Teil
des Körpers der Schraube mit Spiel in der glatten Bohrung,
d.h. der Durchmesser der glatten Bohrung ist um beispielsweise 1 bis 2 mm grösser als der Durchmesser des darin liegenden Teils der Schraube. Der Zweck dieses Spiels wird weiter unten erläutert.

Die Unterlage 15 ist als Unterlagscheibe dargestellt, sie
kann aber anders ausgebildet sein, sofern sie grösser ist als
die glatte Bohrung im verstellbaren Backen 5, damit sie sich auf den verstellbaren Backen 5 abstützt und nicht durch die glatte Bohrung durchgehen kann, und sofern sie das Anziehen der Schraube gewährleistet, indem sie bewirkt, dass der Schraubenkopf 14 auf dem verstellbaren Backen 5 ohne eine solche Reibung, die eine Verstellung bewirken könnte, drehbar ist.

Wenn die Schraube des Befestigungsmittels 13 angezogen ist, wird der verstellbare Backen 5 durch den Schraubenkopf 14 und die Unterlagscheibe 15 zum Schlitten 4 hin gespannt, wobei die zusammenfallenden Auflageflächen 11 und 12 aufeinandergedrückt werden und somit eine Reibung entsteht, die ein Verrücken der Auflageflächen 11 und 12 in bezug auf einander verhindert. Bei angezogener Schraube des Befestigungsmittels 13 ist also der verstellbare Backen 5 gegenüber dem Schlitten 4 unverrückbar festgehalten. Wenn die Schraube des Befestigungsmittels 13 hingegen gelöst ist, ist es den Auflageflächen 11 und 12 möglich, aufeinander zu gleiten, was ein Verstellen des verstellbaren Backens 5 gegenüber dem Schlitten 4 erlaubt.

Die Schraube des Befestigungsmittels 13 kann auch nicht nur gelöst, sondern vollständig abgeschraubt und samt Unterlagscheibe 15 vom Schlitten 4 und vom verstellbaren Backen 5 entfernt werden, was zur Montage des verstellbaren Backens 5 ohnehin nötig ist, aber auch beispielsweise ein Auswechseln des verstellbaren Backens 5 ermöglicht. Die damit erreichten Vorteile werden weiter unten geschildert.

Im Zusammenhang mit dem Verstellen des verstellbaren Backens 5 gegenüber dem Schlitten 4 weist der Schlitten einen beispielsweise zylindrischen Zapfen 16 auf, dessen Achse senkrecht zur Auflagefläche 11 des Schlitten 4 steht, während der verstellbare Backen 5 eine glatte Bohrung 17 aufweist, deren Achse senkrecht zur Auflagefläche 12 des verstellbaren Backens 5 steht. Die Bohrung 17 entspricht mit kleinstmögli-

cher Spielpassung dem Zapfen 16 insofern, als der verstellbare Backen 5 auf dem Schlitten 4 durch Einsetzen des Zapfens 16 in die Bohrung 17 montierbar ist. Bei gelöster Schraube des Befestigungsmittels 13 bilden der Zapfen 16 und die Bohrung 17 zusammen ein Drehlager für die Bewegung des verstellbaren Backens 5 gegenüber dem Schlitten 4. Die Achsen des Zapfens 16 und der Bohrung 17 fallen also zusammen, wenn der verstellbare Backen 5 auf dem Schlitten 4 montiert ist, und der Durchmesser der Bohrung 17 ist nur um ein solches Mass grösser als der Durchmesser des Zapfens 16, wie es nötig ist, um die Einstellung der Position des verstellbaren Backens 5 ohne hinderliche Reibung aber mit dem kleinstmöglichem Spiel zu gewährleisten.

Die im vorangehenden bereits erwähnte Vorrichtung 10 zum Feinjustieren der zwischen den Messflächen 8 und 9 dargestellten Dimension ist beispielsweise ein Feintrieb mit Körper 18, Bolzen 19 und Klemmvorrichtung 20 einer solchen Art, wie sie auch in Bügelmessschrauben verwendet wird. Ein solcher Feintrieb ist also bekannt und wird hier nicht näher beschrieben, wobei der Hub des Bolzens 19 beispielsweise wenige Millimeter beträgt. Der Feintrieb wirkt zwischen dem verstellbaren Backen 5 und dem Schlitten 4: zu diesem Zweck ist der Körper 18 des Feintriebs am Schlitten 4 fest angeordnet, beispielsweise angeschraubt.

Wenn der auf dem Schlitten 4 montierte verstellbare Backen 5 um den Zapfen 16 in Richtung des Feintriebs gedreht wird, kommt das freistehende Ende des Bolzens 19 mit einer Ambossstelle des verstellbaren Backens 5 in Anschlag. Wenn dann noch eine Kraft auf den verstellbaren Backen 5 parallel zur Gleitrichtung 7 und in Richtung des Feintriebs ausgeübt wird, kommt auch der Zapfen 16 in Anschlag mit der Wandung der Bohrung 17. Bei diesem Sachverhalt ist die Position der Ambossstelle stellvertretend für die Position des verstellbaren Backens 5 gegenüber dem Schlitten 4, die Ambosstelle ist also eine Referenzstelle gegenüber dem Schlitten 4. Umgekehrt ist die Position jeder Stelle eines gegenüber dem Schlitten 4 feststehenden Teiles stellvertretend für die Position des Schlittens 4, somit ist der am Schlitten 4 fest angeordnete Körper 18 des Feintriebs eine Referenzstelle gegenüber dem verstellbaren Backen 5.

Es ist aber auch möglich, durch Drehung des verstellbaren Backens 5 um den Zapfen 16 in die entgegengesetzte Richtung den verstellbaren Backen 5 vom Bolzen 19 wegzurücken. In dieser weggerückten Lage kann, sofern das Befestigungsmittel 13, d.h. im dargestellten Beispiel die Schraube und die Unterlagscheibe 15 vorgängig entfernt wurden, auch der verstellbare Backen 5 vom Zapfen 16 abgehoben und vom Schlitten 4 entfernt werden.

Zur Einstellung einer gewünschten vorbestimmten Dimension zwischen der Messfläche 8 des feststehenden Backens 2 und der Messfläche 9 des verstellbaren Backens 5 kann man auf folgende Weise vorgehen.

Zunächst wird bei auf dem Schlitten montierten verstellbaren Backen das Befestigungsmittel 13 (Schraubenkopf 14) gelöst. Nun kann man die Ambossstelle des verstellbaren Backens 5 durch Drehen desselben um die Achse des Zapfens 16 mit dem freistehenden Ende des Bolzens 19 in Anschlag bringen, was durch Drücken von Hand auf den verstellbaren Backen 5 parallel zur Gleitrichtung 7 und in Richtung des Feintriebs erreicht wird. Das im vorangehenden erwähnte Spiel zwischen dem Befestigungsmittel 13, d.h. im vorliegenden Beispiel zwischen der Schraube und der Bohrung, erfüllt den Zweck, dass das Befestigungsmittel 13 die eben beschriebene Bewegung des verstellbaren Backens 5 gegenüber dem Schlitten 4 nicht behindert. Durch Weiterdrücken nach dem Anschlag bringt man auch den Zapfen 16 in Anschlag mit der Wandung der Bohrung 17 des verstellbaren Backens 5. Jetzt zieht man das Befestigungsmit-

**0216120**

tel 13 so weit an, dass die Reibung der Auflageflächen 11 und
12 aufeinander gerade noch ein Gleiten des verstellbaren
Backens 5 auf dem Schlitten 4 erlaubt, wenn der Bolzen 19 des
Feintriebs vorgetrieben wird. Die Untersetzung der Bewegung
des Feintriebs verleiht dem Bolzen 19 beim Vortrieb eine sehr
grosse Kraft, wesentlich ist jedoch, dass sich keine Teile
des Feintriebs bei diesem Vorgang deformieren: der Zweck der
Reibung der Auflageflächen 11 und 12 aufeinander ist ja nur,
die mit dem Vortrieb des Kolbens erreichte Position des verstellbaren Backens 5 augenblicklich gegenüber dem Schlitten 4
zu fixieren, wenn der Vortrieb beendet ist.

Die einzustellende gewünschte vorbestimmte Dimension ist beispielsweise durch den Messwert Null auf einer Messuhr dargestellt, d.h. die gewünschte vorbestimmte Dimension wurde vorgängig auf einer dazu bestimmten Präzisionsmaschine eingestellt, worauf diese Dimension mit der Messuhr abgenommen und
der Zeiger der Messuhr beim Abnehmen der Dimension auf Null
gesetzt wurde. Von nun an wird der Abstand zwischen den Dornen der Messuhr jedesmal gleich der gewünschten vorbestimmten
Dimension sein, wenn die Messuhr Null anzeigt.

Während der vorangehenden Stufen des Verfahrens war der
Schlitten 4 noch nicht unbedingt auf der Schiene 3 aufgesetzt, jetzt muss man ihn aber aufsetzen.

Man stellt nun zwischen den Messflächen 8 und 9 eine vorläufige Dimension ein, die grösser ist als die gewünschte vorbestimmte Dimension. Da noch keine grosse Präzision erforderlich ist, erreicht man diese Einstellung leicht und schnell,
indem man den Schlitten 4 auf der Schiene 3 durch Gleiten
verstellt. Anschliessend arretiert man den Schlitten 4 gegenüber der Schiene 3 und dem Sockel 1, im dargestellten Beispiel durch Anziehen der Schrauben 6 der Klemmvorrichtung.

Um wieviel die vorläufige Dimension von der gewünschten vorbestimmten Dimension abweichen darf, ist im wesentlichen von
der Zuverlässigkeit der Ablesung der Messuhr abhängig. Dies
wird im nachstehenden eingehender erläutert. Die Richtung der
Abweichung der vorläufigen Dimension von der gewünschten vorbestimmten Dimension ist dabei so zu wählen, dass die Abweichung reduziert wird, wenn der Bolzen 19 des Feintriebs in
Richtung zum verstellbaren Backen 5 bewegt wird, d.h. wenn
durch Betätigung des Feintriebs das freistehende Ende des
Bolzens 19 gegen die Ambossstelle des verstellbaren Backens 5
gedrückt wird.

Nun betätigt man den Feintrieb behutsam, um den Bolzen 19 zum
verstellbaren Backen hin zu bewegen, während man die vorläufige Dimension zwischen der Messfläche 8 des feststehenden
Backens 2 und der Messfläche 9 des verstellbaren Backens 5
laufend misst. Indem der Bolzen 19 den verstellbaren Backen 5
gegenüber dem Schlitten 4 gleitend verschiebt, wird die vorläufige Dimension vermindert, ihr Wert nähert sich demjenigen
der gewünschten vorbestimmten Dimension. Genau wenn die
Messuhr den Anzeigewert Null erreicht, ist auch die Gleichheit zwischen der vorläufigen Dimension und der gewünschten
vorbestimmten Dimension erreicht: daraufhin zieht man die
Klemmvorrichtung 20 des Feintriebs an. Von nun an ist die
gewünschte vorbestimmte Dimension zwischen der Messfläche 8
des feststehenden Backens 2 und der Messfläche 9 des verstellbaren Backens 5 abnehmbar, solange die Reibung der Auflageflächen 11 und 12 aufeinander nicht durch Störkräfte
überwunden wird, welche den verstellbaren Backen 5 von der
erreichten Lage wegrücken. Zur Vermeidung des Risikos einer
ungewollten Verstellung ist es daher zweckmässig, jedoch
nicht unerlässlich, auch das Befestigungsmittel 13, d.h. die
Schrauben mit dem Schraubenkopf 14, fest anzuziehen.

Die gewünschte vorbestimmte Dimension kann also zwischen der Messfläche 8 des feststehenden Backens 2 und der Messfläche 9 des verstellbaren Backens 5 auch bei wenig angezogenem Befestigungsmittel 13 abgenommen werden. Es genügt dazu, dass der verstellbare Backen 5 parallel zur Gleitrichtung 7 und in Richtung des Feintriebs, also zum Bolzen 19 hin gedrückt wird, um jegliches Spiel aufzuheben. Eine vorteilhafte Folge davon ist, dass man den verstellbaren Backen 5 vom Schlitten 4 abnehmen kann, beispielsweise um ihn selbst sowie das freistehende Ende des Bolzens 19 zu reinigen und einer Zustandskontrolle zu unterziehen oder zu einem Zweck, der weiter unten erläutert wird: der verstellbare Backen 5 kann anschliessend, durch das beschriebene Andrücken an den Bolzen 19, wieder genau in die eingestellte Position gebracht werden.

Ein weiterer Vorteil der beschriebenen Lehre ist, dass bei der Übertragung der Bewegung des Bolzens 19 auf die eigentliche Messstelle, welche etwa in der Mitte der Messfläche 9 liegt, und wenn wie in der Zeichnung dargestellt der Zapfen 16 und der Bolzen 19 in Nähe von entgegengesetzten Enden des verstellbaren Backens 5 daran angreifen, eine Untersetzung etwa im Faktor 2:1 stattfindet, was die Einstellbewegung des verstellbaren Backens 5 verfeinert und die Leichtigkeit noch erhöht, mit welcher die gewünschte Präsision erreichbar ist.

Bezüglich der Abweichung der vorstehend erwähnten vorläufigen Dimension von der gewünschten vorbestimmten Dimension wurde im vorstehenden auf die Zuverlässigkeit der Ablesung der Messuhr hingewiesen. Es handelt sich dabei im wesentlichen um eine Sicherstellung, dass die Bedienungsperson keine volle Umdrehung des Zeigers der Messuhr übersieht und dass sie sich in der Zählung der vollen Umdrehungen des Zeigers der Messuhr nicht verzählt. Zur Beseitigung dieses Risikos kann der Hub des Bolzens 19 auf einen vorbestimmten Bereich der Feinjustierung begrenzt sein. Dieser vorbestimmte Bereich ist kleiner als der Bereich, der einer vollen Umdrehung des Zeigers des Messuhr entspricht. Mit einer solchen Begrenzung des Hubs des Bolzens 19 kann der Zeiger der Messuhr bei der Vornahme der Feinjustierung nicht um eine volle Umdrehung bewegt werden, so dass der entsprechende Bedienungsfehler gar nicht mehr auftreten kann.

In Fig. 1 sind die Messfläche 8 des feststehenden Backens 2 und die Messfläche 9 des verstellbaren Backens 5 einander zugewandt, woraus sich ergibt, dass die Dimension, die sich als Extremwert des Abstands zwischen diesen Messflächen 8 und 9 einstellen und messen lässt, eine Innendimension als Maximalwert des Abstands ist. Die Aussenseiten der Backen 2 und 5 können wie dargestellt ebenfalls bogenförmig ausgebildet und mit der Form- und Oberflächenqualität von Messflächen bearbeitet sein: diese Aussenseiten sind dann zur Darstellung von Aussendimensionen als Maximalwert des Abstandes verwendbar. Bei der Verwendung einer Aussendimension in der Form eines Maximalwerts sind allerdings Massnahmen zu treffen, um zu sichern, dass der Kontakt des Verwendungsinstruments mit den Messflächen (zur Messung oder zur Übernahme des Abstands) tatsächlich beim Extremwert des Abstands erfolgt: solche Massnahmen sind beispielsweise die Wahl der Krümmung oder die Begrenzung der Messflächen auf einen kleinen Bereich in Nähe des jeweils richtigen Messpunkts. Dabei muss das Befestigungsmittel 13, d.h. die Schrauben mit dem Schraubenkopf 14, fest angezogen werden. Als Massnahme wird jedoch die nachstehend beschriebenen Ausbildung des Erfindungsgegenstandes bevorzugt.

Wie in Fig. 3 schematisch dargestellt wird, kann der feststehende Backen 2 mit zwei bogenförmigen Messflächen 8,8' in doppelkonkaver Anordnung versehen werden, während der Schlitten 4 auf die Schiene 3 wahlweise in zwei entgegengesetzte Richtungen aufsetzbar ist. Je nach der gewählten Orientierung des Schlittens 4 auf der Schiene 3 ist die Messfläche 9 des

**0216120**

verstellbaren Backens 5 dem feststehenden Backen 2 zugewandt
oder abgewandt. Somit kann ein verstellbarer Backen 5, der
nur eine Messfläche 9 trägt, wahlweise zur Darstellung sowohl
von Innen- wie von Aussendimensionen verwendet werden, indem
die Messfläche 9 des verstellbaren Backens 5 durch Umkehren
des Schlittens 4 auf der Schiene 3 wahlweise mit der einen
oder mit der anderen der beiden Messflächen 8,8' des feststehenden Backens 2 gepaart wird.

Ein Vorteil der Erfindung ist noch darin zu erblicken, dass
auf der Schiene 3 mehrere Schlitten 4 angeordnet werden können, von denen jeder einen verstellbaren Backen 5 und eine
Vorrichtung zur Feinjustierung 10 auf die vorstehend beschriebene Weise trägt. Die mögliche Anzahl der Schlitten ist
nur von der Länge der Schiene und von der Länge eines einzelnen Schlittens abhängig. Es können also mehrere Innen- und
Aussendimensionen auf einer einzelnen Lehre dargestellt werden. Die Anzahl der in einer Fertigungswerkstatt benötigten
Lehren wird dadurch drastisch reduziert.

Hier ist nun von Vorteil, dass die verschiedenen verstellbaren Backen 5 von ihren jeweiligen Schlitten 4 abnehmbar sind
und durch das bereits beschriebene Andrücken an den Bolzen 19
wieder genau in die eingestellte Position gebracht werden
können: die verstellbaren Backen 5, welche kleineren Innendimensionen entsprechen, können entfernt werden und stehen
nicht im Wege, wenn grössere Innendimensionen abgenommen werden. Auf gleiche Weise können die verstellbaren Backen 5,
welche grösseren Aussendimensionen entsprechen, entfernt werden und sie stehen nicht im Wege, wenn kleinere Aussendimensionen abgenommen werden.

Sofern die Präzision der Fertigung an den entscheidenden
Stellen der verstellbaren Backen 5 (im wesentlichen die Auflagefläche 12, die Bohrung 17 und die Ambosstelle) die Präzision der abzunehmenden Dimension übertrifft, können alle

0216120

verstellbare Backen 5 als einander gleich gelten, so dass
keine Folgen von Verwechslungen beim Einsetzen der Backen auf
ihren Schlitten zu befürchten sind. Dann kann ein verstellbarer Backen 5 wahlweise auf jeden der Schlitten 4 aufgesetzt
werden. Als Folge davon vermindert sich drastisch die zur
Verwendung und als Reserve benötigte Anzahl verstellbarer
Backen 5: in den meisten Fällen braucht man ja zu einem gegebenen Zeitpunkt nur eine einzelne Dimension oder eine beschränkte Anzahl verschiedener Dimensionen abnehmen zu können.

Patentansprüche

1. Einstellbare Lehre mit mindestens einem feststehenden und einem verstellbaren Backen, welche Backen jeweils mit mindestens einer bogenförmigen Messfläche versehen sind, womit eine gewünschte vorbestimmte Dimension zwischen je einer Messfläche des einen und des anderen Backens darstellbar ist, wobei der verstellbare Backen auf einem Schlitten angeordnet ist, welcher auf einer an einem Sockel der Lehre angeordneten Schiene wahlweise gleitend verschiebbar oder arretierbar ist, dadurch gekennzeichnet, dass

- der verstellbare Backen (5) auf dem Schlitten (4) lösbar festgehalten ist und

- eine Vorrichtung (10) zur Feinjustierung der Position des verstellbaren Backens (5) auf dem Schlitten (4) durch Einstellung des Abstandes zwischen einer Referenzstelle des verstellbaren Backens (5) und einer Referenzstelle des Schlittens (4) vorgesehen ist.

2. Einstellbare Lehre nach Anspruch 1, dadurch gekennzeichnet, dass

- der Schlitten (4) eine zu seiner Gleitrichtung (7) auf der Schiene (3) parallele ebene Auflagefläche (11) und auch der verstellbare Backen (5) eine ebene Auflagefläche (12) aufweist, wobei diese Auflageflächen bei auf dem Schlitten montierten verstellbaren Backen (5) einander entsprechen und aufeinander liegen,

- der Schlitten (4) einen Zapfen (16) aufweist, dessen Achse senkrecht zur genannten Auflagefläche (11) des Schlittens steht, und der verstellbare Backen (5) eine dem Zapfen entsprechende Bohrung (17) aufweist, deren Achse senkrecht zur genannten Auflagefläche (12) des verstellbaren Backens steht, wobei die genannten Achsen bei auf dem Schlitten montierten verstellbaren Backen zusammenfallen und der verstellbare Backen gegenüber dem Schlitten um diese gemeinsame Achse drehbar ist, und

- ein zwischen dem Schlitten (4) und dem verstellbaren Backen (5) wirkendes und lösbares Befestigungsmittel (13) vorgesehen ist, das im gelösten Zustand das Gleiten der Auflageflächen (11,12) des verstellbaren Backens und des Schlittens aufeinander und somit das Gleiten des verstellbaren Backens gegenüber dem Schlitten erlaubt und im fest angezogenen Zustand die Auflageflächen aufeinander drückt, um den verstellbaren Backen gegenüber dem Schlitten festzuhalten.

3. Einstellbare Lehre nach Anspruch 2, dadurch gekennzeichnet, dass das gelöste Befestigungsmittel (13) vom Schlitten (4) und vom verstellbaren Backen (5) entfernbar ist und der verstellbare Backen bei entferntem Befestigungsmittel vom Schlitten entfernbar ist.

4. Einstellbare Lehre nach Anspruch 3, dadurch gekennzeichnet, dass das Befestigungsmittel (13) eine im Schlitten (4) senkrecht zu dessen Auflagefläche (11) angeordnete Gewindebohrung und eine im verstellbaren Backen (5) senkrecht zu dessen Auflagefläche (12) angeordnete glatte Bohrung sowie eine zur Gewindebohrung passende Schraube und eine durch die glatte Bohrung nicht durchführbare Unterlage (15) für den Schraubenkopf (14) umfasst, wobei bei auf dem Schlitten montierten verstellbaren Backen der nicht in der Gewindebohrung eingeschraubte Teil des Körpers der Schraube mit Spiel in der glatten Bohrung liegt und der verstellbare Backen durch Anziehen der Schraube von der Unterlage auf den Schlitten andrückbar ist.

5. Einstellbare Lehre nach Anspruch 1, dadurch gekennzeichnet, dass die Vorrichtung zur Feinjustierung (10) einen Feintrieb mit Bolzen (19) und Klemmvorrichtung (20) umfasst, dessen Körper (18) am Schlitten (4) fest angeordnet ist und die Referenzstelle des Schlittens bildet, während bei auf dem Schlitten montierten verstellbaren Backen (5) das freistehende Ende des Bolzens mit einer die Referenstelle des verstellbaren Backens bildende Ambossstelle in Anschlag bringbar ist.

6. Einstellbare Lehre nach Anspruch 5, dadurch gekennzeichnet, dass der Hub des Bolzens (19) im Feintrieb auf einen vorbestimmten Bereich der Feinjustierung begrenzt ist.

7. Einstellbare Lehre nach Anspruch 1, dadurch gekennzeichnet, dass der feststehende Backen (2) mit zwei bogenförmigen Messflächen (8,8') in doppelkonkaver Anordnung versehen ist und der Schlitten (4) auf die Schiene (3) wahlweise in zwei entgegengesezte Richtungen aufsetzbar ist, wobei je nach der gewählten Richtung die Messfläche (9) des verstellbaren Backens (5) dem feststehenden Backen (2) zugewandt oder abgewandt ist.

8. Einstellbare Lehre nach Anspruch 3, dadurch gekennzeichnet, dass auf der Schiene (3) mehrere Schlitten (4) mit je einer Vorrichtung zur Feinjustierung (10) angeordnet sind, wobei ein verstellbarer Backen (5) wahlweise auf jeden der Schlitten aufsetzbar ist.

9. Verfahren zur Betrieb der Lehre nach den Ansprüchen 2 und 5, dadurch gekennzeichnet, dass man zur Einstellung einer gewünschten vorbestimmten Dimension zwischen je einer Messfläche (8,9) des einen und des anderen Backens

- bei auf dem Schlitten (4) montierten verstellbaren Backen (5) das Befestigungsmittel (13) löst,

0218120

- durch Drehen des verstellbaren Backens (5) um die Achse des Zapfens (16) die Ambossstelle mit dem freistehenden Ende des Bolzens (19) in Anschlag bringt,

- durch Drücken auf den verstellbaren Backen (5) mit Richtung vom Backen zum Bolzen (19) und parallel zur Gleitrichtung (7) des Schlittens den Zapfen (16) des Schlittens (4) mit der Wandung der entsprechenden Bohrung (17) des verstellbaren Backens (5) in Anschlag bringt,

- das Befestigungsmittel (13) so anzieht, dass noch ein Gleiten des verstellbaren Backens (5) auf dem Schlitten (4) gegen eine vom Feintrieb (10) überwindbare Reibung der Auflageflächen (11,12) aufeinander möglich ist,

- eine vorläufige Dimension, die grösser ist als die gewünschte vorbestimmte Dimension, zwischen je einer Messfläche (8,9) des einen und des anderen Backens (2,5) durch Gleiten des Schlittens (4) auf der Schiene (3) einstellt,

- den Schlitten (4) gegenüber der Schiene (3) und dem Sockel (1) arretiert, und

- durch Betätigung des Feintriebs (10) den verstellbaren Backen (5) gegenüber dem Schlitten (4) gleitend verschiebt, bis die vorläufige Dimension gleich der gewünschten vorbestimmten Dimension ist.

Fig.1

Fig.3

Fig.2

Europäisches
Patentamt

**EUROPÄISCHER RECHERCHENBERICHT**

## EINSCHLÄGIGE DOKUMENTE

EP 86111336.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR - A - 973 625 (JOUANNY) <br> * Gesamt * <br><br> -- | 1 | G 01 B 3/14 |
| A | DE - C - 868 357 (KÖHLER) <br> * Gesamt * <br><br> -- | | |
| A | DE - C - 931 007 (SCHLEMMING) <br> * Gesamt * <br><br> -- | | |
| A | DE - B - 1 003 961 (SCHWENK) <br> * Gesamt * <br><br> ---- | | |

**RECHERCHIERTE SACHGEBIETE (Int. Cl.4)**

G 01 B 3/00
G 01 B 5/00
G 01 B 21/00
B 25 H 7/00
B 23 B 17/00
B 23 Q 25/00

Der vorliegende Recherchenbericht wurde für alle Patentansprüche erstellt.

| Recherchenort | Abschlußdatum der Recherche | Prüfer |
|---|---|---|
| WIEN | 27-11-1986 | TOMASELLI |